Europäisches Patentamt

European Patent Office

Office européen des brevets

(11) Veröffentlichungsnummer : **0 344 402 B1**

# (12) EUROPÄISCHE PATENTSCHRIFT

(45) Veröffentlichungstag der Patentschrift :
**24.08.94 Patentblatt 94/34**

(51) Int. Cl.$^5$ : **H04L 25/49**

(21) Anmeldenummer : **89101602.4**

(22) Anmeldetag : **31.01.89**

(54) **Verfahren zum Übertragen von Daten über Lichtwellenleiter.**

(30) Priorität : **03.06.88 DE 3818936**

(43) Veröffentlichungstag der Anmeldung :
**06.12.89 Patentblatt 89/49**

(45) Bekanntmachung des Hinweises auf die
Patenterteilung :
**24.08.94 Patentblatt 94/34**

(84) Benannte Vertragsstaaten :
**AT BE CH DE ES FR GB GR IT LI LU NL SE**

(56) Entgegenhaltungen :
**EP-A- 0 176 015**
**CH-A- 672 213**
**FR-A- 2 529 415**

(73) Patentinhaber : **KE
KOMMUNIKATIONS-ELEKTRONIK GMBH &
CO
Kabelkamp 20
D-30179 Hannover (DE)**

(72) Erfinder : **Brahms, Martin, Dipl.Ing.
Schneppenhorststrasse 86
D-3000 Hannover 91 (DE)**
Erfinder : **Chahabadi, Ziaedin, Dr.-Ing.
Brinkfeld 31
D-3252 Bad Münder 1 (DE)**

(74) Vertreter : **Döring, Roger (DE)
Patentassessor
Kabelkamp 20
D-30179 Hannover (DE)**

EP 0 344 402 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein Verfahren zum Übertragen von Daten zwischen zwei Stationen über Lichtwellenleiter, unter Verwendung eines von einem digitalen, nach festliegenden Regeln aufgebauten elektrischen Code abgeleiteten optischen Codes, bei welchem jedes elektrische Bit in der sendenden Station in einem Transcoder in ein korrespondierendes optisches Doppelbit umgesetzt wird, bei welchem die optischen Doppelbits in der empfangenden Station in einem Transcoder wieder in digitale elektrische Bits rückgewandelt werden, bei welchem in einen vom Transcoder der sendenden Station ausgehenden optischen Hauptkanal Bits eines optischen Zusatzkanals mit gegenüber dem Hauptkanal niedrigerer Bitrate jeweils an Stelle eines Doppelbits des Hauptkanals eingefügt und auf der Empfängerseite wieder aus dem optischen Hauptkanal herausgenommen werden, bei welchem die Bits des Zusatzkanals als Doppelbits in den Hauptkanal eingefügt werden, welche gleich einer verbotenen Bitkombination sind, die sich bei der Umkodierung des elektrischen in den optischen Code ergibt, bei welchem nur Bits des Zusatzkanals der einen Wertigkeit als Doppelbits in den Hauptkanal eingefügt werden, während die anderswertigen Bits des Zusatzkanals nicht in den Hauptkanal eingefügt werden, wobei zur Erhaltung des im Transcoder der empfangenden Station bekannten Abstands zwischen den durch Bits des Zusatzkanals zu ersetzenden Doppelbits im Hauptkanal das an sich zu ersetzende Doppelbit des Hauptkanals unverändert bleibt und bei welchem in der empfangenden Station die durch die Bits des Zusatzkanals ersetzten Doppelbits des Hauptkanals nach Maßgabe der Regeln des elektrischen Codes mittels einer sequentiellen Logik zurückgewonnen werden (FR-A-2 529 415).

Die Übertragung der Daten zwischen den beiden Stationen erfolgt über Lichtwellenleiter, durch deren Einsatz Übertragungen über sehr lange Strecken ohne Zwischenverstärker möglich sind. Die Lichtwellenleiter sind dämpfungsarm und sehr breitbandig. Sie haben den weiteren Vorteil, daß keine Beeinflussung der Datenübertragung durch äußere elektrische und magnetische Störfelder auftritt. Die Daten können in heutiger Technik bereits mit sehr hohen Übertragungs- bzw. Bitraten übertragen werden. Bekannte Kanäle sind beispielsweise der 34 Mbit/s-Kanal und der 140 Mbit/s-Kanal. Für die Übertragung wird beispielsweise der CMI-Code verwendet, der nach festliegender Umkodierungsvorschrift als binärer Code mit zwei unterschiedlichen Zuständen aus dem ternären elektrischen AMI-Code mit drei unterschiedlichen Zuständen umcodiert ist. Ein anderer bekannter Code zur optischen Übertragung ist der aus dem elektrischen HDB3-Code umcodierte MCMI-Code. Mit diesen bekannten optischen Übertragungsverfahren können gegenüber herkömmlicher Technik mit metallischen Leitern wesentlich mehr Kanäle bei Einsatz von wesentlich weniger "Leitern" übertragen werden. Trotzdem kann es beispielweise aus Kapazitätsgründen erforderlich sein, auf vorhandenen Übertragungswegen zusätzliche Kanäle zu übertragen, ohne daß die sonstige Datenübertragung beeinflußt wird.

Mit dem bekannten Verfahren nach der eingangs erwähnten FR-A-2 529 415 werden zusätzliche Kanäle dadurch übertragen, daß in den optischen Hauptkanal Doppelbits eines optischen Zusatzkanals mit gegenüber dem Hauptkanal niedrigerer Bitrate eingefügt werden. Dabei werden jeweils nur "Oen" des Hauptkanals durch Doppelbits des Zusatzkanals ersetzt. Diese Vorschrift des bekannten Verfahrens ist zwingend, so daß dasselbe auf die Verwendung des in der Druckschrift angegebenen HDB3-Codes beschränkt ist.

Der Erfindung liegt die Aufgabe zugrunde, das eingangs geschilderte Verfahren so weiterzubilden, daß mindestens ein Zusatzkanal bei Verwendung eines beliebigen Codes mit definierten Regeln übertragen werden kann.

Diese Aufgabe wird gemäß der Erfindung dadurch gelöst, daß die Doppelbits des Zusatzkanals in beliebiger Position und in definierten Abständen, die im Empfänger der empfangenden Station bekannt sind, in den Hauptkanal eingefügt werden.

Dieses Verfahren ist beispielsweise für die Einfügung eines Zusatzkanals für Servicezwecke geeignet, über den Bedienungspersonal beim Installieren einer Übertragungsstrecke oder auch bei deren späterer Überwachung ohne Beeinflussung des Hauptkanals telefonisch Informationen austauschen kann. Das Verfahren ist aber auch anwendbar, wenn die Kapazität einer Übertragungsstrecke ohne Beeinflussung des Hauptkanals erhöht werden soll.

Mit diesem Verfahren werden ohne großen Aufwand die Bits des Zusatzkanals in einer beliebigen Position als Ersatz eines Doppelbits des Hauptkanals in denselben eingefügt. Das für ein Bit des Zusatzkanals eingefügte Doppelbit ist gleich einer sich aus der Umkodierungsvorschrift ergebenden verbotenen Bitkombination, so daß es auf der Empfängerseite auf besonders einfache Weise im Datenstrom des Hauptkanals erkannt werden kann. Es wird jeweils nur die verbotene Bitkombination als Doppelbit eingefügt, welche einer Wertigkeit, also beispielweise einer "1", im Zusatzkanal entspricht. Die andere Wertigkeit, also die "0", des Zusatzkanals wird dann nicht in den Hauptkanal eingefügt. Es könnte hier aber auch entgegengesetzt verfahren werden, wenn nämlich die "0" des Zusatzkanals als verbotene Bitkombination in den Hauptkanal eingefügt wird, während dann die "1" nicht eingefügt wird. Der Abstand der zu ersetzenden Doppelbits des Hauptkanals bleibt dabei erhalten, da die Doppelbits des Hauptkanals, welche an sich zu ersetzen wären, dann unverändert bleiben, wenn ein Bit des Zusatzkanals der "falschen" Wertigkeit einzufügen wäre.

Die Bits des Zusatzkanals können in bevorzugter Ausführungsform mit gleichbleibenden Abständen in den Hauptkanal eingefügt werden. Der Transcoder der empfangenden Station kennt diesen Abstand, so daß der Zusatzkanal problemlos wieder aus dem Hauptkanal herausgefiltert werden kann. Die Abstände können jedoch auch variieren. Dann muß dem Transcoder der empfangenden Station aber bekannt sein, wie die Abstände zwischen den eingefügten Doppelbits schwanken. Vor Beginn der Übertragung werden die Abstände, in denen diese Doppelbits in den Hauptkanal eingefügt werden, festgelegt. Sie werden dem Transcoder der empfangenden Station aufgegeben. Die Transcoder der sendenden und der empfangenden Station sind identisch ausgebildet.

Unter "Zusatzkanal" ist nicht nur ein einziger Kanal mit einer bestimmten Bitrate zu verstehen. Im Zusatzkanal können vielmehr auch zwei oder mehr Unterkanäle durch Multiplexen zusammengefaßt sein.

Die Information des Hauptkanals darf nicht verfälscht werden. Die ersetzten Doppelbits des Hauptkanals müssen daher in der empfangenden Station wieder rückgebildet werden. Da der optische Code von einem digitalen elektrischen Code abgeleitet ist, der zur Erzielung von Gleichspannungsfreiheit eine bestimmte Gesetzmäßigkeit hat, ist das besonders einfach. Es kann durch diese Gesetzmäßigkeit durch die den eingefügten bzw. ersetzten Doppelbits folgenden und/oder vorangehenden Doppelbits des Hauptkanals mit der ein Gedächtnis aufweisenden sequentiellen Logik auf der Empfangsseite problemlos rekonstruiert werden, welches Doppelbit bzw. welche Doppelbits ersetzt wurde bzw. wurden.

Bei einer bestimmten Folge von Doppelbits im Hauptkanal wird nach der verbotenen Bitkombination durch den Transcoder unmittelbar eine zweite verbotene Bitkombination eingefügt. Aus der Anordnung zweier verbotener Bitkombinationen hintereinander im Hauptkanal kann der Empfänger definitionsgemäß die ersetzten Doppelbits zurückbilden.

Weitere vorteilhafte Ausgestaltungen der Erfindung gehen aus den Unteransprüchen hervor.

Das Verfahren nach der Erfindung wird im folgenden für zwei unterschiedliche Codes beispielsweise erläutert.

In einen Hauptkanal mit einer Übertragungs- bzw. Bitrate von beispielsweise 34 Mbit/s (genauer 34,384 Mbit/s) soll beispielsweise ein Zusatzkanal mit einer Bitrate von 1,7 Mbit/s eingefügt werden. Die Bitrate des Zusatzkanals ist hier mit der Zahl 20 also ein ganzzahliger Teiler derjenigen des Hauptkanals.

Der optische Code des Hauptkanals soll der aus dem ternären AMI-Code umcodierte CMI-Code sein. Für den gleichspannungsfreien AMI-Code gilt die Regel bzw. Gesetzmäßigkeit, daß einer +1 jeweils eine -1 und umgekehrt folgt. Es soll folgende Umkodierungsvorschrift gelten:

| AMI | CMI |
|-----|-----|
| +1 | 11 |
| -1 | 00 |
| 0 | 01. |

Die Kombination bzw. das Doppelbit 10 ist eine bei dieser Umkodierung verbotene Bitkombination. Sie wird im folgenden mit "K" bezeichnet.

Die verbotene Bitkombination K wird zur Einfügung des Zusatzkanals in den Hauptkanal verwendet. Es soll dabei jeweils eine 1 des Zusatzkanals als K anstelle eines beliebigen Doppelbits des Hauptkanals eingefügt werden. Dabei wird jeweils jedes 20. Doppelbit des Hauptkanals ersetzt, wenn der Zusatzkanal eine 1 hat. Wenn der Zusatzkanal eine O hat, passiert nichts, sondern das an sich zu ersetzende Doppelbit des Hauptkanals bleibt unverändert. Da der Transcoder der empfangenden Station aber weiß, daß an der 20. Stelle ein einem Bit des Zusatzkanals entsprechendes Doppelbit kommen müßte, wird eine O registriert. Es könnte auch jeweils eine O des Zusatzkanals als K in den Hauptkanal eingefügt werden, während dann die 1 des Zusatzkanals nicht eingefügt wird. Es werden also immer nur gleichwertige Bits des Zusatzkanals als K in den Hauptkanal eingefügt, während die anderswertigen Bits nicht eingefügt werden. Der vorgegebene Abstand der zu ersetzenden Doppelbits im Hauptkanal bleibt aber erhalten.

Die Rückgewinnung des ersetzten Doppelbits des Hauptkanals durch die sequentielle Logik der empfangenden Station geschieht wie folgt. Es werden dazu der Übersichtlichkeit halber die Bezeichnungen des AMI-Codes verwendet, an Stelle der tatsächlich vorhandenen Doppelbits des CMI-Codes:

1. Im Hauptkanal ist eine O durch ein K ersetzt, der eine weitere O folgt. Aus der Tatsache, daß dem K jetzt eine O folgt, ist definitionsgemäß zu erkennen, daß eine O ersetzt wurde. Das wurde der sequentiellen Logik so aufgegeben.

2. Eine O des Hauptkanals, der eine 1 folgt, wird durch ein K ersetzt. Aus dem Vergleich der Vorzeichen der der O folgenden 1 und der der O vorangehenden 1 wird erkannt, daß eine O ersetzt wurde, da diese beiden 1en entgegengesetztes Vorzeichen haben. Das entspricht der Gesetzmäßigkeit des AMI-Codes, bei welchem die 1en abwechselnd unterschiedliches Vorzeichen haben. Es kann hier also keine 1 durch das K ersetzt worden sein.

3. Es wird eine 1 des Hauptkanals, der eine weitere 1 folgt, durch ein K ersetzt. Hier ist klar, daß eine 1 ersetzt wurde, da die der ersetzten 1 folgende 1 und die derselben vorangehende 1 das gleiche Vorzeichen haben. Es muß also eine 1 ersetzt worden sein.

4. Eine 1 des Hauptkanals, der eine O folgt, wird durch ein K ersetzt. In diesem Fall wird im Transcoder der sendenden Station automatisch auch die der 1 folgende O des Hauptkanals durch ein K ersetzt. Im Transcoder der empfangenden Station werden also im Hauptkanal zwei aufeinander folgende K erkannt, von denen das erste K im erwarteten zeitlichen Raster liegt. Das zweite K folgt also dem im Raster liegenden K. Definitionsgemäß ist damit klar, daß im Hauptkanal die Bitfolge 10 ersetzt wurde. Für den Zusatzkanal wird das zweite K im Hauptkanal nicht ausgewertet.

Es kann auf diese Weise ohne Verfälschung der Information des Hauptkanals ein Zusatzkanal mit gegenüber dem Hauptkanal niedrigerer Bitrate in denselben eingefügt werden. Am günstigsten ist das, wenn die Bitrate des Zusatzkanals ein ganzzahliger Teiler der Bitrate des Hauptkanals ist. Das muß aber nicht sein.

Die Bits des Zusatzkanals werden am günstigsten mit gleichbleibendem Abstand in den Hauptkanal eingefügt. Es können aber auch periodisch oder aperiodisch schwankende Abstände verwendet werden, solange die Abstände im Transcoder der empfangenden Station bekannt sind.

Auch die angegebene Umkodierungsvorschrift ist nicht zwingend. Es kann auch eine andere Umkodierung vom AMI-Code auf den CMI-Code vorgenommen werden. In jedem Fall bleibt aber eine verbotene Bitkombination übrig, die als verbotenes Doppelbit "K" in den Hauptkanal eingefügt werden kann.

Das Verfahren ist in gleicher Weise auch für den aus dem elektrischen HDB3-Code abgeleiteten optischen MCMI-Code anwendbar. Auch für den HDB3-Code gilt die Regel bzw. Gesetzmäßigkeit, daß einer +1 eine -1 und umgekehrt folgt. Es wird hier als zusätzliches Merkmal eine Folge von mehr als 3 Nullen nicht zugelassen, sondern durch sogenannte "V"-Bits unterbrochen. Auch hier lassen sich an Hand der Gesetzmäßigkeit des HDB3-Code die ersetzten Doppelbits durch die sequentielle Logik in der empfangenden Station zurückgewinnen. Es gelten dabei die für den AMI-Code unter 1. bis 4. angegebenen Kriterien. Zusätzlich gilt folgendes:

5. Es wird ein V des Hauptkanals, dem eine O folgt, durch ein K ersetzt. Definitionsgemäß erkennt die Logik, daß ein V und damit eigentlich eine O ersetzt wurde.

6. Es wird ein Bit in einer Kombination eingesetzt, die eine Nullfolge des Datenstroms symbolisiert. Eine solche Kombination kann OOOV oder auch 100V lauten. Das V hat dabei immer das gleiche Vorzeichen wie die im Datenstrom vorangehende 1. Bei der Kombination OOOV können die weiter oben angegebenen Regeln mit eindeutigem Ergebnis ohne Änderungen angewendet werden. Die Kombination 100V kann hingegen zu falschen Ergebnissen führen, wenn das V oder die dem V vorangehende O durch ein K ersetzt werden. In diesem Fall wird im Transcoder der sendenden Station automatisch dem K ein zweites K vorangestellt, welches die dem V bzw. der O des Hauptkanals vorangehende O ersetzt. Im Transcoder der empfangenden Station werden auch hier, wie bei 4., im Hauptkanal zwei aufeinander folgende K erkannt. Da das zweite K hier aber dem im zeitlichen Raster liegenden K vorangeht, weiß die sequentielle Logik, daß - unter Berücksichtigung weiterer vorangehender und folgender Bits - ein V oder eine O in einer Nullfolge des Hauptkanals ersetzt wurden. Auch hier wird das zweite K für den Zusatzkanal nicht ausgenutzt.

## Patentansprüche

1. Verfahren zum Übertragen von Daten zwischen zwei Stationen über Lichtwellenleiter, unter Verwendung eines von einem digitalen, nach festliegenden Regeln aufgebauten elektrischen Code abgeleiteten optischen Codes, bei welchem jedes elektrische Bit in der sendenden Station in einem Transcoder in ein korrespondierendes optisches Doppelbit umgesetzt wird, bei welchem die optischen Doppelbits in der empfangenden Station in einem Transcoder wieder in digitale elektrische Bits rückgewandelt werden, bei welchem in einen vom Transcoder der sendenden Station ausgehenden optischen Hauptkanal Bits eines optischen Zusatzkanals mit gegenüber dem Hauptkanal niedrigerer Bitrate jeweils an Stelle eines Doppelbits des Hauptkanals eingefügt und auf der Empfängerseite wieder aus dem optischen Hauptkanal herausgenommen werden, bei welchem die Bits des Zusatzkanals als Doppelbits in den Hauptkanal eingefügt werden, welche gleich einer verbotenen Bitkombination sind, die sich bei der Umkodierung des elektrischen in den optischen Code ergibt, bei welchem nur Bits des Zusatzkanals der einen Wertigkeit als Doppelbits in den Hauptkanal eingefügt werden, während die anderswertigen Bits des Zusatzkanals nicht in den Hauptkanal eingefügt werden, wobei zur Erhaltung des im Transcoder der empfangenden Station bekannten Abstands zwischen den durch Bits des Zusatzkanals zu ersetzenden Doppelbits im Hauptkanal das an sich zu ersetzende Doppelbit des Hauptkanals unverändert bleibt und bei welchem in der empfangenden Station die durch die Bits des Zusatzkanals ersetzten Doppelbits des Hauptkanals nach Maßgabe der Regeln des elektrischen Codes mittels einer sequentiellen Logik zurückgewonnen werden, dadurch gekennzeichnet, daß die Doppelbits des Zusatzkanals in beliebiger Position und in definierten Abständen, die im Transcoder der empfangenden Station bekannt sind, in den Hauptkanal eingefügt werden.

2. Verfahren nach Anspruch 1, dadurch gekennzeichnet, daß als elektrischer Code der AMI-Code und als optischer Code der CMI-Code verwendet werden.

3. Verfahren nach Anspruch 1, dadurch gekennzeichnet, daß als elektrischer Code der HDB3-Code und als optischer Code der MCMI-Code verwendet werden.

4. Verfahren nach einem der Ansprüche 1 bis 3, dadurch gekennzeichnet, daß die Abstände zwischen den Doppelbits des Hauptkanals, welche durch ein Bit des Zusatzkanals zu ersetzen sind, gleichbleibend sind.

5. Verfahren nach einem der Ansprüche 1 bis 3, dadurch gekennzeichnet, daß die Abstände zwischen den Doppelbits des Hauptkanals, welche durch ein Bit des Zusatzkanals zu ersetzen sind, periodisch oder aperiodisch schwanken.

**Claims**

1. A method of transmitting data between a transmitting and a receiving station by means of an optical waveguide, by using a digital optical code which is derived from an electrical code with fixed rules and a transcoder in the transmitting station recodes each electrical bit to an optical double bit and the receiving station includes a transcoder for recoding the optical double bits back to the bits of the fixed electrical code, wherein into an optical main channel, at the transcoder of the transmitting station, bits of an additional optical channel having a lower bitrate than the main channel are inserted in place of double bits of the main channel and sampled from the main channel in the receiving station, wherein the bits of the additional channel are inserted into the main channel in form of double bits that are identical to a forbidden bit combination that results during the recoding of the electrical to the optical code, wherein only bits of the additional channel having the same significance are inserted into the main channel while the bits of the additional channel having the other significance are not inserted, thereby for maintaining the spacing between two double bits of the main channel that are to be replaced by bits of the additional channel, which is known to the transcoder of the receiving station, the replacable double bit of the main channel is unchanged, and wherein at the receiving station, the bits of the main channel that were replaced by bits of the additional channel are identified by means of sequential logic with applying the fixed rules of the electrical code, characterised in that the double bits of the additional channel are inserted into the main channel in any desired position and with defined spacings which are known in the transcoder of the receiving station.

2. A method according to claim 1, characterised in that the electrical code is the AMI code, and the optical code is the CMI code.

3. A method according to claim 1, characterised in that the electrical code is the HDB3 code, and the optical code is the MCMI code.

4. A method according to one of the claims 1 to 3, characterised in that the spacings between the bits of the main channel that are replaced by the double bits of the additional optical channel are constant.

5. A method according to one of the claims 1 to 3, characterised in that spacings between the bits in the main channel that are replaced by the double bits of the additional optical channel vary periodically or aperiodically.

**Revendications**

1. Procédé de transmission de données entre deux stations par l'intermédiaire de guides d'ondes lumineuses, en employant un code optique dérivé d'un code électrique numérique construit selon les règles fixes, procédé dans le cas duquel chaque bit électrique est converti, dans la station émettrice, dans un transcodeur, en un double bit optique correspondant, dans le cas duquel les doubles bits optiques sont, dans la station réceptrice, dans un transcodeur, reconvertis à nouveau en bits électriques numériques, dans le cas duquel dans un canal principal optique partant du transcodeur de la station émettrice des bits d'un canal supplémentaire optique d'un débit binaire moindre que celui du canal principal sont chacun insérés en une position d'un double bit du canal principal et sont à nouveau extraits du canal principal optique du côté récepteur, dans le cas duquel les bits du canal supplémentaire sont insérés dans le canal principal sous forme de doubles bits qui sont identiques à une combinaison de bits qui est interdite et qui apparaît lors du transcodage du code électrique en le code optique, dans le cas duquel ne sont insérés comme doubles bits dans le canal principal que les bits du canal supplémentaire d'une seule valeur de bit, tandis que les bits du canal supplémentaire de l'autre valeur de bit ne sont pas insérés dans le canal principal, étant précisé que pour respecter la distance, connue du transcodeur de la station réceptrice, entre les doubles bits du canal principal à remplacer par des bits du canal supplémentaire, le double bit du canal principal à remplacer en soi reste inchangé, et dans le cas duquel, dans la station réceptrice, les doubles bits du canal principal qui ont été remplacés par les bits du canal supplémentaire sont récupérés, au moyen d'une logique séquentielle, conformément aux règles du code électrique, procédé caractérisé par le fait que l'on insère dans le canal principal les doubles bits du canal supplémentaire en une position quelconque et à des distances définies qui sont connues du transcodeur de la station réceptrice.

2. Procédé selon la revendication 1, caractérisé par le fait que comme code électrique on emploie le code AMI et comme code optique, le code CMI.

3. Procédé selon la revendication 1, caractérisé par le fait que comme code électrique on emploie le code HDB3 et comme code optique le code MCMI.

4. Procédé selon l'une des revendications 1 à 3, caractérisé par le fait que les distances entre les doubles bits du canal principal, qui sont à remplacer par un bit du canal supplémentaire, sont constantes.

5. Procédé selon l'une des revendications 1 à 3, caractérisé par le fait que les distances entre les doubles bits du canal principal qui sont à remplacer par un bit du canal supplémentaire varient de façon périodique ou apériodique.